# EUROPEAN PATENT SPECIFICATION

(11) **EP 1 274 796 B1**
(45) Date of publication and mention of the grant of the patent: **13.10.2004**
(21) Application number: 01927908.2
(22) Date of filing: 10.04.2001
(51) Int. Cl.: C08L 63/00, C08J 9/00, C08J 9/04

(54) **COHERENT INSERT**
ZUSAMMENHÄNGENDE EINFÜGUNG
INSERT COHERENT

(30) Priority: 20.04.2000 EP 00810351; 04.05.2000 GB 0010737
(43) Date of publication of application: 15.01.2003
(73) Proprietor: Huntsman Advanced Materials (Switzerland) GmbH, 4057 Basel (CH)
(72) Inventor: BUGG, Dean, Anthony, Bar Hill, Cambridge CB3 8TW (GB)
(74) Representative: Baruh, Colette
(86) International application number: PCT/EP2001/004111
(87) International publication number: WO 2001/081468

(56) References cited:
- WO-A-00/52086
- WO-A-97/19124
- WO-A-97/19125
- US-A- 5 708 120
- DATABASE WPI Section Ch, Week 199427 Derwent Publications Ltd., London, GB; Class A32, AN 1994-221218 XP002171592 & JP 06 155599 A (SUMITOMO CHEM CO LTD), 3 June 1994 (1994-06-03)

## Description

The instant invention relates to a process for manufacturing a coherent insert and a process for filling a three-dimensional cavity using said insert.

The use of solid coherent inserts for filling a three-dimensional cavity is known. The known inserts are, for instance, of cylindrical shape and consist of a syntactic plastic material, for instance a corresponding cured epoxy material. "Syntactic" is understood to mean a material comprising hollow microspheres as filler, thereby being of rather low density and having good mechanical performance. These inserts are particularly useful for reinforcing sandwich panels like, for instance, honeycomb-type composites. The reinforcing process using such a cylindrical insert includes the removement of a circular section of the core of the panel in the area where the panel is to be reinforced. Then an expanding splice adhesive tape is cut to the required size and wrapped around the insert. After the release film is removed from the tape, the insert can be installed in the honeycomb panel cavity. Finally, the assembly of core material, insert, adhesive tape and, optionally, additional skin material covering the outer sides of core material is co-cured at a suitable temperature to form a reinforced composite structure.

It is an objective of the instant invention to facilitate the application of solid inserts. In this regard it has surprisingly been found that the use of a separate adhering vehicle for fastening the insert into the surrounding panel like the splice tape mentioned beforehand can be avoided if specific solid inserts are used.

Accordingly, on subject of the instant invention is a process for filling for a three-dimensional cavity, more particularly a cavity in the core of a sandwich-type composite, with an insert which is solid at ambient temperature and is characterized in that it consists of a solid curable composition, which expands and is able to adhesively bonding when heat-cured.

For the puropses of this application "ambient temperature" means preferably a temperature below of 35°C, for instance 10 to 30°C. "Coherent" means that the insert is at ambient temperature a solid preformed monolithic article, and not powdery.

The inserts used according to the invention consist preferably of a solid expandable curable epoxy composition.

This solid curable epoxy compositions is particularly a composition comprising:
(A) an epoxy resin or an epoxy containing compound with
(B) a solidifying amine system which reacts with (A) to give a product, preferably with a Kofler Heat Bank melting point of between 55° and 120°C, which is not present in sufficient quantities to allow or cause chemical gelation under the reaction conditions chosen for (A) and (B) and which essentially stops solidifying before or when all its active epoxy additive hydrogen groups are consumed by the epoxy groups,
(C) a hardener system for (A) and the reaction product of (A) and (B)
   which is different from (B) and which remains substantially unreacted under the conditions of reaction chosen for (A) with (B),
(D) an expanding agent which is of low or preferably no reactivity under the condition of reaction chosen for (A) and (B), and, optionally
(E) customary additives,
which composition has been solidified by reaction of (A) with (B) under conditions under which (C) does substantially not react with (A) and the reaction product of (A) and (B).

Such compositions are, for instance, described in more detail in WO-A-97/19124.

Before solidifying then composition by reacting (A) and (B) the components (A), (B), (C), (D) and (E) are blended together by any convenient batch or continuous operation but in such a way that at least (A) and (B) become homogeneous. The reaction between (A) and (B) may be carried out at any suitable temperatue and condition provided that neither it, nor the exothermic heat generated from it causes (C) or (D) to substantially react whilst it is taking place.

The epoxy resins or epoxy group containing compounds (A) may be glycidyl ethers, glycidyl amines, glycidyl esters or cycloaliphatic compound or combinations of these including halogenated versions where required. Preferred epoxy resins and blends are those which are suitable liquids for ready mixing with the other ingredients at suitable temperatures which will usually be below 120°C. Epoxy resins or epoxy containing compounds or blends of them which are liquid at room temperatures are the most convenient.

The preferred solidifying systems (B) used to convert the liquid resins are principally compounds or mixtures of compounds whose most reactive groups relative to the epoxy materials employed are primary or secondary amines. Epoxy reactive tertiary amines under the conditions of reaction chosen for (A) and (B) are not acceptable for this invention.

Of particular use for component (B) are aromatic and cycloaliphatic primary and secondary amines and blends of these. The major advantage of these amines, particularly the aromatic amines, is the low rate of reactivity coupled with the extremely long life at normal ambient temperatures of their reaction products with the resins. With the majority of compounds from these classes of amines the life of the reaction product with the resins greatly exceeds that of the life of the resins with their primary hardeners (C). Some alicyclic, heterocyclic and aliphatic amines are also effective as advancing agents and those which comply with cessation of reaction once their amino hydrogen atoms have been consumed by the epoxy resins and considered as part of this invention. In all cases it is essential that the tertiary amines generated during the solidification reaction have very low reactivity with epoxy groups under the conditions of reaction chosen for (A) and (B) and afterwards during storage. The solidifying amines are usually and mostly difunctional and/or polyfunctional with respect to the epoxy compounds (A) although monofunctional amines can be used to some extent if of value to a particular composition.

Difunctional amines may be used at any desired ratio with difunctional epoxy resins but greater than difunctional amines only to levels where gelation does not occur. The solidifying systems may contain a variety of other groups but these should only be of very low or no reactivity towards the epoxy groups involved under the reaction of (A) and (B). Most useful are those solidifying systems which react gradually to substantial completion at room temperatures over a period of around 2-14 days. The solidifying systems must be present in such quantities that when their amino hydrogen atoms are all substantially reacted with the epoxy materials (A) under the conditions set for reaction (A) and (B) the product is not chemically gelled and has a melting point which is preferably greater than 55°C and lower than 120°C.

The hardener systems, (C) for the epoxy compounds (A) and the reaction products between (A) and (B) can be selected from the wide variety of those well known in the field of epoxy chemistry other than acid anhydrides which react preferentially with the advancing agents (B). Typical but not exclusive examples of useful hardeners are aromatic amines such as diaminodiphenyl sulphones, boron trifluoride amine complexes, latent imidazoles, carboxylic acids, biguanides, hydrazides, dicyandiamide, latent epoxy amine adducts and substituted ureas. As explained a main requirement of the hardener is that it should not substantially react whilst (A) and (B) are being reacted. There may be one or several hardeners used together, some of which may accelerate the curing rates of the other provided they comply with the requirement immediately above.

The expanding agents (D) may be of any type which does not adversely interfere with the production of the solid epoxy composition nor its ability to cure satisfactorily.

The expansion obtained may result from chemical or physical reactions or both. An important feature is that the foaming agent should not cause substantial foaming during the process for the production of the solid epoxy compositions, nor on storage of it in any form at normal workshop temperatures or below. All significant expansion should take place during the actual curing cycles. Examples of suitable expanding agents include Azodicarbonamide, Azodiisobutyronitrile, Benzene sulphonhydrazide, Dinitroso pentamethylene tetramine, Oxybis benzene sulphonhydrazide, p toluene sulphonyl hydrazide and Expandable plastic such as those sold under the Trade Name Expancel. These are largely spherical shells of varying composition such as polyvinylidene chloride and or polyacrylonitrile plus other copolymerised additives, and the inside contains isopentane with or without air.

Other additives, (E) which can be used to modify the physical properties of the cured or uncured compositions include but are not limited to accelerators for the hardener (C), thixotropes, toughening agents, wetting agents, surfactants, fibrous materials, dyes, pigments flame retardants, smoke suppressants, coupling agents, , flow assisting materials, fusible glasses and stabilisers.

Still another type of important additives are fillers which can be used in a wide variety for the purposes of the instant invention, either singly or in form of a mixture of two or more than two different fillers.

Whereas any filler materials can, in general, be used for the instant invention, suitable fillers particularly include hollow microspheres, for instance made of glass, carbon, silicates or a variety of plastic materials. A common feature of these microspheres is their low density, which is also imparted to the paste and is the prime reason for their use. An additional consideration is the relative ease they give to the cured composition for sanding or smoothing.

Another type of fillers to be particularly mentioned here are electrically conductive fillers. The presence of such fillers allows to heat the curable composition inductively with the aid of an induction coil for instance, either when manufacturing the coherent inserts according to the invention or when using a ready-for-use-insert for filling a cavity as described below.

The above mentioned epoxy compositions can be prepared with either low or high melt viscosities as required through the careful selection of (A) and (B). They cure within 30 minutes to a few hours at 100 to 150°C, for instance at about 120°C or within a few at 180°C to 260°C, dependent on the selection of (C). Furthermore, a wide range of desired mechanical and thermal properties by the careful selection of (A), (B) and (C), and a ready modification of physical and mechanical properties may also be achieved by the introduction of additives (E).

The inserts used according to the invention are preferably storage stable at ambient tempertures, more particular storage stable for three month and more at ambient temperatures, especially for more than 6 months.

The inserts used according to the instant invention can, for instance, be manufactured with the aid of a process wherein an expandable curable composition, which is solid at ambient temperature, for example a corresponding epoxy composition, is formed to a desired shape under conditions where it does neither substantially expand nor gel or cure. Said process is a further object of the instant invention.

To this purpose, a solid expandable curable composition can for instance be melted under sufficiently mild conditions where it does neither substantially expand nor gel or even cure and cast into the desired physical form, using for instance a mould.

In another specific embodiment of the above mentioned process a liquid solidifiable composition is solidified to form the expandable curable composition which is solid at ambient temperature.

If, for instance, a compositions as described in WO-A-97/19124 and as mentioned above is used for manufacturing inserts the solidification of the liquid starting composition can be carried out by allowing it to stand for a time period of some hours to some days (for instance from 5 hours to 14 days) at ambient temperature. Should it be desirable to speed the solidification this can be achieved by heating provided the temperature used does not cause significant reaction of (C) with (A) or the reaction product of (A) and (B), either by direct heat or that evolved by completing the reaction between (A) and (B) or by the addition of accelerators such as carboxylic acids which do not adversely affect the softening point stability

Still another aspect of the instant invention is a process for filling a three-dimensional cavity in a honeycomb material, wherein an insert is put into the cavity and is heated, preferably under pressure, whereby the curable composition comprised in the insert melts, expands and cures, thereby filling the cavity in the first material substantially complete.

In an specific embodiment of said process the cavity is covered on at least one side with a suitable covering material before heating and the covering material is adhesively bonded to said first material by means of the heating.

The inserts obtained by the process according to the instant invention are well suited provide support for load bearing elements like nails or screws and so on in materials where such support is normally not available, for instance honeycomb-type materials. Therefore a specific embodiment of the above described process for filling a cavity in a material includes a process step wherein a load bearing element is fixed to the insert.

As mentioned above the heating can be carried out, for instance, inductively. It is, of course, clear that the insert must comprise sufficient electrically conductive material in order to be able to be inductively heated. This electrically conductive material can be a particulate material like an electrically conductive filler or an electrically conductive compact object incorporated into the insert, for instance a metallic nail or screw.

### Example 1: Manufacture of self adhesive expandable inserts used according to the invention.

| | |
|---|---|
| Araldite GY260 (Bisphenol A Epoxy resin from Ciba SC) | 100 pbw |
| Dicyanamide | 4.3 pbw |
| Chlorotoluron | 2.2 pbw |
| 3,3'-dimethyl 4,4'-diamino dicyclohexyl methane | 10.6 pbw |
| Cyclohexylamine | 6.0 pbw |
| Eccospheres IG 101 (hollow microsperes) | 50 pbw |
| Expancel 551 DU (Unexpanded thermoplastic microsheres) | 1.5 pbw |

All of the components of the above formulation are thoroughly mixed together using a mechanical mixer under vacuum for 5 minutes. The mixture is transferred to cylindrical moulds of dimensions 25.4mm in height and a diameter of 12.7mm. Then the mixture is allowed to stand at room temperature for about 17 hours followed by heating for 2 hours at 60°C. The samples are allowed to cool to 23°C and the samples were solid.

### Example 2:

Solid cylindrical blocks made according to Example 1 are kept in the moulds but with the top surface open. The samples and moulds are placed in an oven at 120°C for 60 minutes. The mould and samples are then removed and allowed to cool back to room temperature. When the samples are removed from the oven it can be seen that the samples have increased in volume. The density of the sample before curing is 0.66g/cm³ and the density of the sample after curing is 0.52g/cm³. The compressive properties of the samples are measured according to the test specification ASTM D695. The following results are obtained:

| | |
|---|---|
| Compressive strength at 23°C | 37.5 MPa |
| Compressive modulus at 23°C | 1182 MPa |
| | |
| Compressive strength at 177°C | 7.7MPa |
| Compressive modulus at 177°C | 127 MPa |

### Example 3:

The compositions 3/1 to 3/9 given in Table 1 and Table 2 were processed analogous to Example 1. The detailed processing conditions can also be found in said tables, as well as the properties of the samples when processed according to Example 2.

### Example 4:

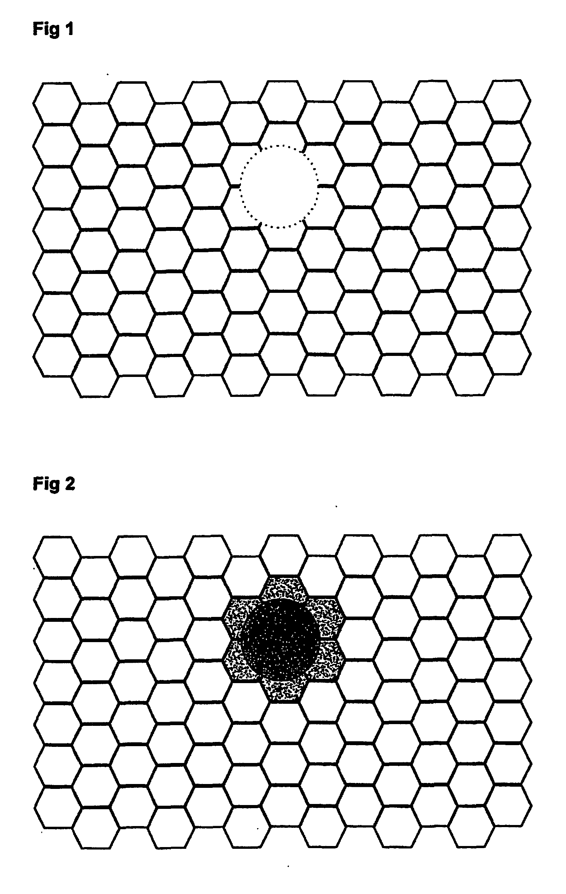

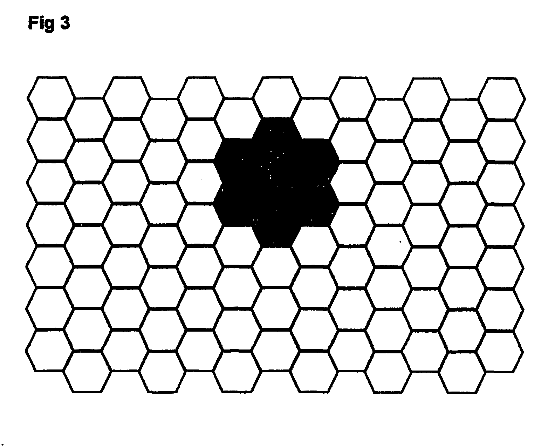

A cylindrical insert is made according to Example 1 having a height of 12.5mm and a diameter of 25mm. Aluminium honeycomb with depth of 12.5mm and an average cell diameter of 6mm is placed on an aluminium plate. A circular hole is cut out of the aluminium honeycomb with a diameter of 25mm (see Fig1 below). The solid insert is placed into the circular hole and another aluminium plate is placed on top to from a sandwich panel (Fig2). The panel is placed in a hydraulic press and 300 kPa pressure are applied. The temperature of the press plates is raised from room temperature to 120°C over a period of 30 minutes and the panel remains in the press at 120°C for 1 hour. The panel is then removed and allowed to cool to room temperature. The three aluminium components adhere together and on disassembly it can be seen that the insert has expanded to fill the uneven edges of hole and adheres to them (Fig 3)

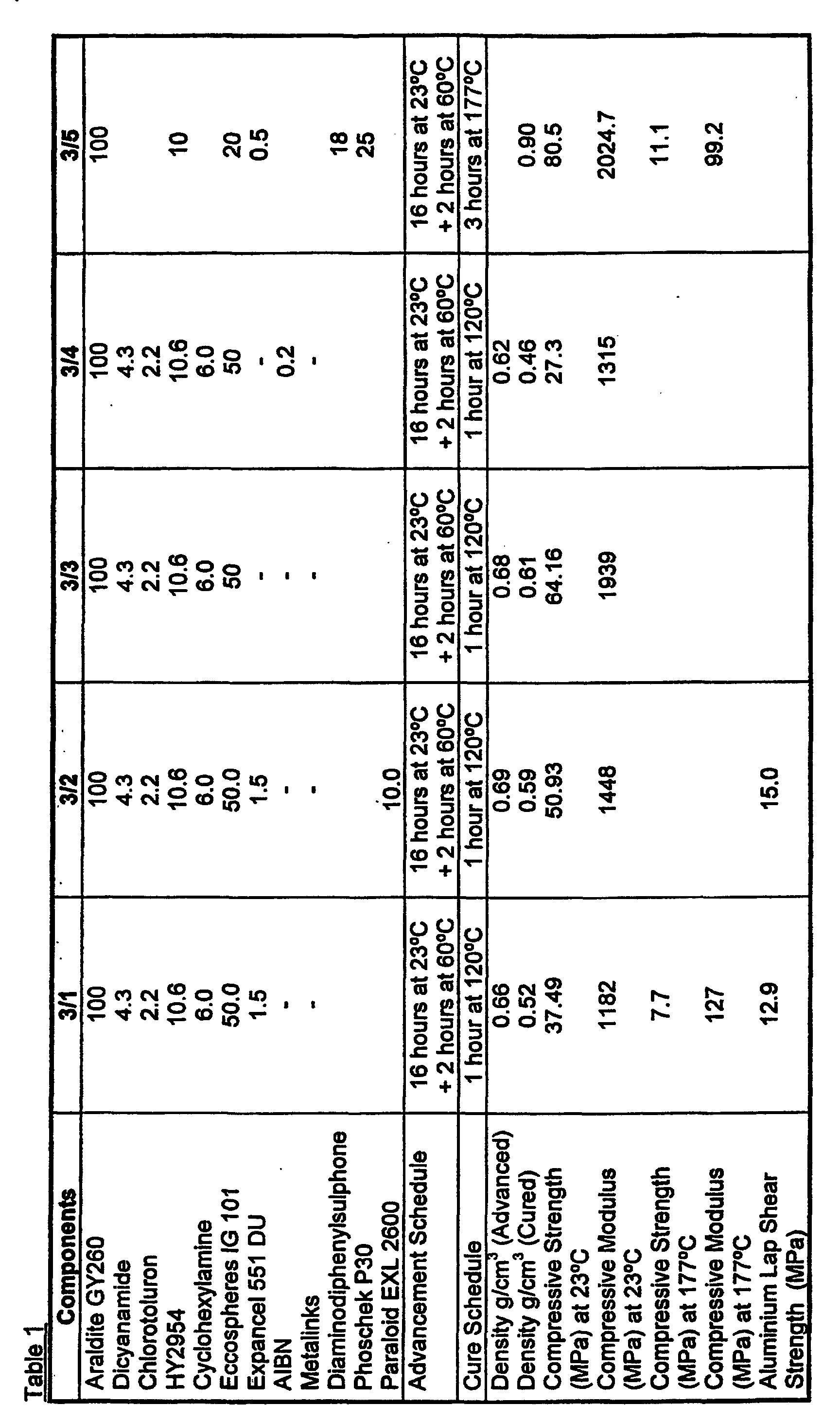

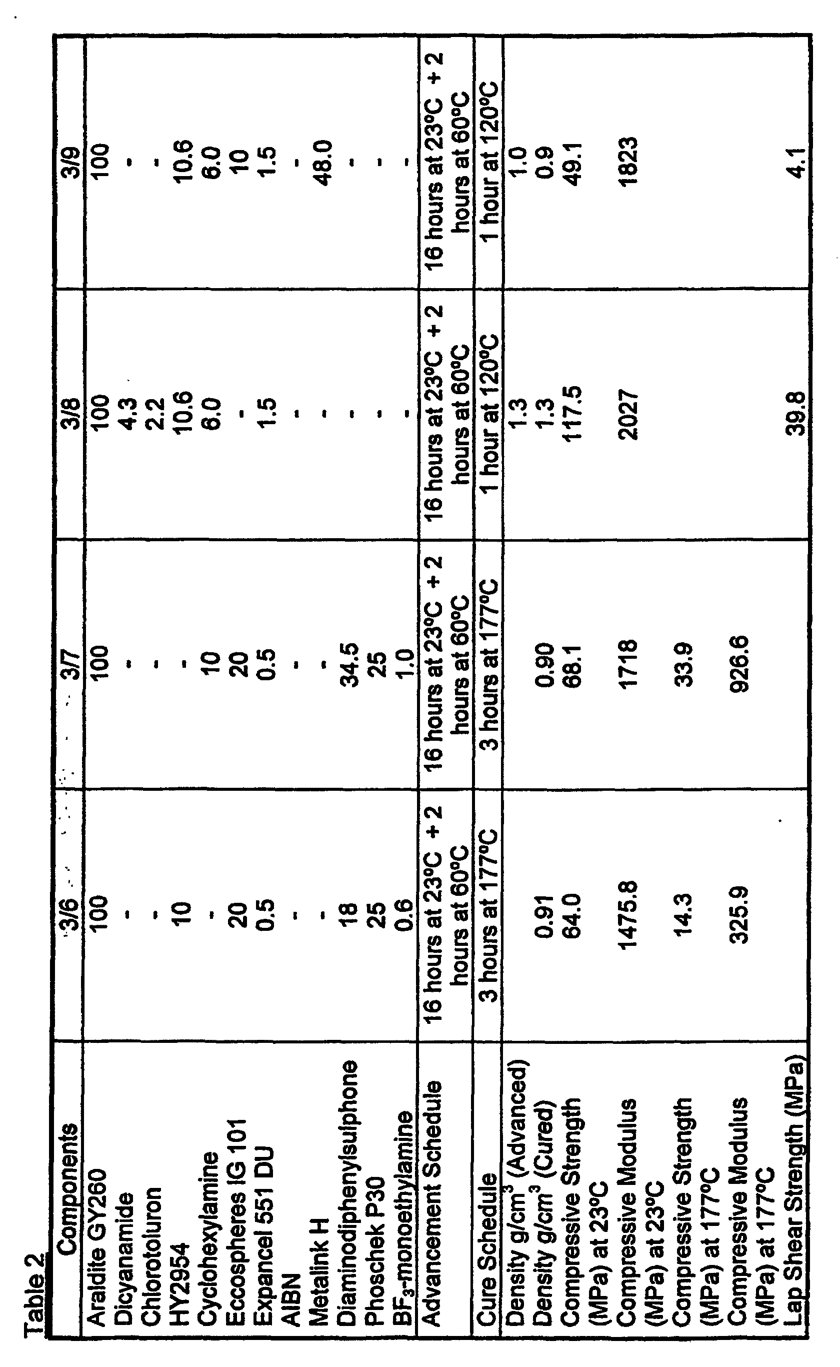

## Claims

1. A process for filling a three-dimensional cavity in a first material, wherein a coherent insert which is solid at ambient temperature and which consists of a composition comprising:
(A) an epoxy resin or an epoxy containing compound with
(B) a solidifying amine system which reacts with (A) to give a product, preferably with a Kofler Heat Bank melting point of between 55° and 120°C, which is not present in sufficient quantities to allow or cause chemical gelation under the reaction conditions chosen for (A) and (B) and which essentially stops solidifying before or when all its active epoxy additive hydrogen groups are consumed by the epoxy groups,
(C) a hardener system for (A) and the reaction product of (A) and (B) which is different from (B) and which remains substantially unreacted under the conditions of reaction chosen for (A) with (B),
(D) an expanding agent which is of low or preferably no reactivity under the condition of reaction chosen for (A) and (B), and optionally
(E) customary additives,
which composition has been solidified by reaction of (A) with (B) under conditions under which (C) does substantially not react with (A) and the reaction product of (A) and (B); is put into the cavity and is heated, preferably under pressure, whereby the curable composition comprised in the insert melts, expands and cures, thereby filling the cavity in the first material completely.

2. A process according to claim 1, wherein the cavity is covered on at least one side with a covering material before heating and the covering material is adhesively bonded to said first material by means of the heating.

3. A process according to claim 1 or 2 wherein the heating is carried out inductively.

4. A process according to claim 1 to 3 wherein a load bearing element is fixed to the insert before or after heating.

5. A process according to claim 1 to 4 wherein said first material is a honeycomb material.

6. A process according to claim 1 to 5, wherein the curable epoxy composition is storage stable at ambient temperature.

7. A process according to claim 1 to 6, wherein the customary additives (E) comprise a filler.

8. A process according to claim 7, wherein the filler comprises hollow microspheres.

9. A process according to claim 7 or 8, wherein the filler comprises an electrically conductive material.

10. A process according to claim 1 to 9, wherein the coherent insert has been formed to a desired shape under conditions where it does neither substantially expand nor gel or cure.

11. A process according to claim 10, wherein the coherent insert has been formed from a liquid solidifiable composition which has been solidified to form the expandable curable composition which is solid at ambient temperature.

12. A process according to claim 11, wherein the solidification of the liquid composition is carried out under simultaneous shaping of the insert.

## Patentansprüche

1. Ein Verfahren zum Auffüllen eines dreidimensionalen Hohlraums in einem ersten Material, wobei ein kohärenter Einsatz, der bei Raumtemperatur fest ist und der aus einer Zusammensetzung besteht, die
(A) ein Epoxidharz oder eine epoxidhaltige Verbindung mit
(B) einem Amin-Verfestigungssystem, welches mit (A) reagiert, um ein Produkt bevorzugt mit einem Kofler-Schmelztisch-Schmelzpunkt zwischen 55°C und 120°C zu ergeben, welches nicht in ausreichenden Mengen vorhanden ist, um chemische Gelbildung unter den Reaktionsbedingungen, die für (A) und (B) gewählt wurden, zu ermöglichen oder zu bewirken und welches im Wesentlichen die Verfestigung stoppt, bevor oder wenn alle dessen aktive Wasserstoffgruppen, die an das Epoxid addieren, von den Epoxidgruppen verbraucht sind,
(C) ein Härtemittelsystem für (A) und das Reaktionsprodukt von (A) und (B), welches von (B) verschieden ist und welches im Wesentlichen unter den für (A) mit (B) gewählten Reaktionsbedingungen nicht umgesetzt wird,
(D) ein Treibmittel, das geringe oder bevorzugt keine Reaktivität unter den für (A) und (B) gewählten Reaktionsbedingungen zeigt, und optional
(E) übliche Additive umfasst,
wobei die Zusammensetzung durch Reaktion von (A) mit (B) bei Bedingungen, bei denen (C) im Wesentlichen nicht mit (A) und dem Reaktionsprodukt von (A) und (B) reagiert, verfestigt worden ist;
in den Hohlraum gegeben wird und erwärmt wird, bevorzugt unter Druck, wobei die aushärtbare Zusammensetzung, die in dem Einsatz enthalten ist, schmilzt, sich ausdehnt und aushärtet, wobei sie dabei den Hohlraum des ersten Materials vollständig ausfüllt.

2. Ein Verfahren gemäß Anspruch 1, wobei der Hohlraum vor dem Erwärmen auf wenigstens einer Seite mit einem Werkstoff überzogen wird und der Werkstoff mittels Erwärmen an das erste Material angeklebt wird.

3. Ein Verfahren gemäß Anspruch 1 oder 2, wobei das Erwärmen induktiv ausgeführt wird.

4. Ein Verfahren gemäß Anspruch 1 bis 3, wobei vor oder nach dem Erwärmen ein tragendes Element an dem Einsatz fixiert wird.

5. Ein Verfahren gemäß Anspruch 1 bis 4, wobei das erste Material ein Material mit Wabenstruktur ist.

6. Ein Verfahren gemäß Anspruch 1 bis 5, wobei die aushärtbare Epoxidzusammensetzung bei Raumtemperatur lagerungsstabil ist.

7. Ein Verfahren gemäß Anspruch 1 bis 6, wobei die üblichen Additive (E) einen Füllstoff umfassen.

8. Ein Verfahren gemäß Anspruch 7, wobei der Füllstoff hohle Mikrokügelchen umfasst.

9. Ein Verfahren gemäß Anspruch 7 oder 8, wobei der Füllstoff ein elektrisch leitendes Material umfasst.

10. Ein Verfahren gemäß Anspruch 1 bis 9, wobei der kohärente Einsatz unter Bedingungen, bei denen er sich weder wesentlich ausdehnt noch geliert oder aushärtet, in eine gewünschte Form geformt wurde.

11. Ein Verfahren gemäß Anspruch 10, wobei der kohärente Einsatz aus einer flüssigen, verdichtbaren Zusammensetzung geformt wird, die verfestigt wurde, um die ausdehnbare, aushärtbare Zusammensetzung, die bei Raumtemperatur fest ist, zu bilden.

12. Ein Verfahren gemäß Anspruch 11, wobei die Verfestigung der flüssigen Zusammensetzung unter gleichzeitigem Formen des Einsatzes durchgeführt wird.

## Revendications

1. Procédé pour le remplissage d'une cavité tridimensionnelle dans une première matière, dans lequel un insert cohérent qui est plein à température ambiante et qui consiste en une composition comprenant :
(A) une résine époxy ou un composé à fonction époxy, avec
(B) un système à base d'amine de solidification qui réagit avec (A) pour donner un produit, ayant de préférence un point de fusion sur banc thermique Kofler compris dans l'intervalle de 55° à 120°C, qui n'est pas présent en des quantités suffisantes pour permettre ou provoquer une gélification chimique dans les conditions réactionnelles choisies pour (A) et (B) et qui interrompt essentiellement la solidification avant la consommation ou lors de la consommation de tous ses atomes d'hydrogène à additivité à la fonction époxy actifs par les groupes époxy,
(C) un système de durcisseur pour (A) et le produit de réaction de (A) et (B) qui est différent de (B) et qui reste pratiquement sans réaction dans les conditions de réaction choisies pour (A) avec (B),
(D) un agent d'expansion qui a une réactivité faible ou de préférence nulle dans les conditions de réaction choisies pour (A) et (B) et facultativement
(E) des additifs usuels,
composition qui a été solidifiée par réaction de (A) avec (B) dans des conditions dans lesquelles (C) ne réagit pas substantiellement avec (A) et le produit de réaction de (A) et (B) ; est introduit dans la cavité et est chauffé, de préférence sous pression, la composition durcissable présente dans l'insert subissant ainsi une fusion, une expansion, un durcissement, en remplissant ainsi totalement la cavité dans la première matière.

2. Procédé suivant la revendication 1, dans lequel la cavité est couverte sur au moins une face avec une matière de recouvrement avant chauffage et la matière de recouvrement est liée de manière adhésive à ladite première matière par le chauffage.

3. Procédé suivant la revendication 1 ou 2, dans lequel le chauffage est effectué de manière inductive.

4. Procédé suivant les revendications 1 à 3, dans lequel un élément porteur de charge est fixé à l'insert avant ou après chauffage.

5. Procédé suivant les revendications 1 à 4, dans lequel ladite première matière est une matière en nid d'abeille.

6. Procédé suivant les revendications 1 à 5, dans lequel la composition époxy durcissable est stable au stockage à température ambiante.

7. Procédé suivant les revendications 1 à 6, dans lequel les additifs usuels (E) comprennent une charge.

8. Procédé suivant la revendication 7, dans lequel la charge comprend des microsphères creuses.

9. Procédé suivant la revendication 7 ou 8, dans lequel la charge comprend une matière électriquement conductrice.

10. Procédé suivant les revendications 1 à 9, dans lequel l'insert cohérent a été mis sous une forme désirée dans des conditions dans lesquelles il ne subit ni expansion ni gélification ni durcissement substantiels.

11. Procédé suivant la revendication 10, dans lequel l'insert cohérent a été formé à partir d'une composition liquide solidifiable qui a été solidifiée pour former la composition durcissable expansible qui est pleine à température ambiante.

12. Procédé suivant la revendication 11, dans lequel la solidification de la composition liquide est effectuée avec façonnage simultané de l'insert.
